# FASCICULE DE BREVET EUROPEEN

(11) **EP 3 102 619 B1**
(45) Date de publication et mention de la délivrance du brevet: **20.04.2022**
(21) Numéro de dépôt: 15704281.3
(22) Date de dépôt: 06.02.2015
(51) Int. Cl.: C08F 230/04, C08F 12/14

(54) **PROCEDE DE PREPARATION DE MATERIAUX POLYMERES COMPRENANT UN OU PLUSIEURS ELEMENTS METALLIQUES**
VERFAHREN ZUR HERSTELLUNG VON POLYMERMATERIALIEN MIT EINEM ODER MEHREREN METALLISCHEN ELEMENTEN
PROCESS FOR PREPARING POLYMER MATERIALS COMPRISING ONE OR MORE METALLIC ELEMENTS

(30) Priorité: 06.02.2014 FR 1450910
(43) Date de publication de la demande: 14.12.2016
(73) Titulaire: Commissariat à l'Énergie Atomique et aux Énergies Alternatives, 75015 Paris (FR)
(72) Inventeur: CADRA, Stéphane, F-37550 Saint-Avertin (FR); POUPONNEAU, Pierre, F-37300 Joue-les-Tours (FR); BALLAND LONGEAU, Alexia, F-37000 Tours (FR)
(74) Mandataire: Brevalex
(86) Numéro de dépôt international: PCT/EP2015/052530
(87) Numéro de publication internationale: WO 2015/118116

(56) Documents cités:
- WO-A1-2009/047245
- WO-A1-2011/061229
- C. CROIX ET AL: "New Gold-Doped Foams by Copolymerization of Organogold(I) Monomers for Inertial Confinement Fusion (ICF) Targets", JOURNAL OF INORGANIC AND ORGANOMETALLIC POLYMERS AND MATERIALS, vol. 18, no. 3, 28 février 2008 (2008-02-28), pages 334-343, XP055147703, ISSN: 1574-1443, DOI: 10.1007/s10904-008-9204-1
- MOREAU L ET AL: "Recent advances in development of materials for laser target", LASER AND PARTICLE BEAMS, CAMBRIDGE UNIVERSITY PRESS, CAMBRIDGE, GB, vol. 27, no. 4, 1 janvier 2009 (2009-01-01), pages 537-544, XP008127624, ISSN: 0263-0346, DOI: 10.1017/S0263034609000317
- JIUYANG ZHANG ET AL: "Cobaltocenium-Containing Methacrylate Homopolymers, Block Copolymers, and Heterobimetallic Polymers via RAFT Polymerization", MACROMOLECULES, vol. 45, no. 17, 11 septembre 2012 (2012-09-11), pages 6857-6863, XP055147970, ISSN: 0024-9297, DOI: 10.1021/ma3012784

## Description

### DOMAINE TECHNIQUE

La présente invention a trait à un nouveau procédé de préparation de matériaux polymères, en particulier, de mousses polymères, comprenant un ou plusieurs éléments métalliques, dont la teneur en ces éléments métalliques peut être ajustée facilement selon les besoins de l'application.

Ces matériaux, du fait de la combinaison d'éléments organiques et inorganiques, peuvent présenter des propriétés de nature mécanique, thermique, électrique ou magnétique intéressantes.

Ces matériaux polymères peuvent être utilisés, notamment, dans de nombreuses applications où le dopage par des éléments métalliques revêt une importance, tel que cela est le cas de la catalyse supportée, des matériaux luminescents, des matériaux magnétiques, des matériaux organométalliques structurés, les matériaux pour la décontamination des solutions organiques et aqueuses, les matériaux à empreinte ionique. En particulier, ils peuvent trouver leur application dans l'élaboration de cibles laser utilisés lors d'expériences de fusion par confinement inertiel.

Le domaine général de l'invention est ainsi celui des matériaux polymériques dopés par un ou plusieurs éléments métalliques.

### ÉTAT DE LA TECHNIQUE ANTÉRIEURE

Eu égard au champ d'application extrêmement vaste de ce type de matériaux, de nombreuses équipes ont axé leur recherche sur des techniques d'élaboration de tels matériaux, tels que :
- la (co)polymérisation de monomères porteurs de l'élément métallique; et
- l'incorporation de particules métalliques dans une matrice polymérique.

Concernant la (co)polymérisation de monomères métalliques, cette technique repose sur le principe de présence de l'élément métallique dans le milieu de polymérisation, cette présence étant générée par l'utilisation de monomères porteurs de l'élément métallique dopant souhaité, l'élément métallique pouvant faire partie intégrante de la molécule de monomère (auquel cas on parle de monomères métalliques) ou peut être lié à celle-ci par une réaction de complexation.

Cette technique nécessite toutefois la mise à disposition voire la préparation des monomères associés à l'élément métallique, ce qui peut s'avérer fastidieux et long en termes de mise en œuvre, lorsqu'il s'agit de préparer un matériau polymérique dopé par des éléments métalliques distincts.

Enfin, concernant l'incorporation de particules dans une matrice polymérique, cette technique consiste à ajouter directement, dans la matrice polymérique, les particules métalliques préformées, la taille des particules pouvant varier de l'échelle nanométrique à l'échelle micrométrique. Cette technique permet d'intégrer des particules métalliques spécifiques selon les besoins de l'application. Cependant, le mélange physique du ou des polymères organiques constitutif (s) de la matrice polymérique et des particules métalliques préformées peut conduire à la séparation en deux phases distinctes voire à une agglomération desdites particules, ce qui peut nuire aux propriétés mécaniques, électriques et/ou optiques du matériau résultant. Pour contourner ces inconvénients, deux possibilités peuvent être envisagées :
- soit l'utilisation de polymère(s) constitutif(s) de la matrice polymérique, qui interagissent avec la surface des particules ;
- soit la modification de surface des particules en vue de favoriser la compatibilité de celles-ci avec le ou les polymères constitutifs de la matrice polymérique,
   ces deux possibilités nécessitant toutefois un temps de développement conséquent.

C. CROIX ET AL: "New Gold-Doped Foams by Copolymerization of Organogold(I) Monomers for Inertial Confinement Fusion (ICF) Targets",JOURNAL OF INORGANIC AND ORGANOMETALLIC POLYMERS AND MATERIALS, vol. 18, no. 3, 28 février 2008 , pages 334-343, décrit un procédé de préparation d'un matériau polymérique dopé par un élément métallique qui comprend la polymérisation du monomère StyAuPEt3, de styrene et de divinylbenzène.

WO 2011/061229 et WO 2009/047245 décrivent des complexes de coordination polymérisables comprenant des éléments métalliques.

MOREAU L ET AL: "Recent advances in development of materials for laser target",LASER AND PARTICLE BEAMS, CAMBRIDGE UNIVERSITY PRESS, CAMBRIDGE, GB, vol. 27, no. 4, 1 janvier 2009, pages 537-544, décrit des mousses polymériques dopées avec des métaux tel que l'or, l'indium, l'yitterbium et le titanium et qui sont obtenues à partir de monomères métalliques qui contiennent lesdites éléments.

JIUYANG ZHANG ET AL: "Cobaltocenium-Containing Methacrylate Homopolymers, Block Copolymers, and Heterobimetallic Polymers via RAFT Polymerization",MACROMOLECULES, vol. 45, no. 17, 11 septembre 2012, pages 6857-6863 décrit un procédé de préparation d'un matériau polymérique dopé par deux élément métalliques qui comprend la polymérisation de deux monomères comprenant un groupe chelateur pour les deux différent métaux.

Au vu de ce qui existe, les inventeurs se sont fixé pour but de proposer un nouveau procédé de préparation d'un matériau polymérique dopé par un ou plusieurs éléments métalliques permettant, entre autres :
- l'incorporation d'une large diversité d'éléments métalliques ;
- le contrôle de la teneur des éléments métalliques introduits, notamment, lorsque ceux-ci sont distincts ;
- une mise en œuvre simple.

### EXPOSÉ DE L'INVENTION

Ainsi, l'invention a trait à un procédé de préparation d'un matériau polymérique dopé par au moins un premier élément métallique et au moins un deuxième élément métallique, ledit, au moins, un premier élément métallique et ledit, au moins un deuxième élément métallique étant identiques ou différents l'un de l'autre, ledit procédé comprenant :
a) une étape de copolymérisation d'au moins un premier monomère comprenant au moins un premier élément métallique et d'au moins un deuxième monomère comprenant au moins un groupe chélateur d'au moins un deuxième élément métallique, moyennant l'on obtient un matériau polymérique comprenant des unités répétitives issues de la polymérisation dudit premier monomère, lesquelles unités répétitives comprennent ledit au moins un premier élément métallique et comprenant des unités répétitives issues de la polymérisation dudit deuxième monomère, lesdites unités répétitives comprenant des groupes chélateurs d'au moins un deuxième métallique ; et
lorsque ledit premier élément métallique est différent dudit deuxième élément métallique, ledit procédé comprenant, en outre une étape b) de mise en contact du matériau obtenu à l'étape a) avec une solution comprenant ledit au moins deuxième élément métallique, moyennant quoi ledit au moins deuxième élément métallique est complexé aux groupes chélateurs susmentionnés,
cette étape b) étant facultative lorsque ledit premier élément métallique et ledit deuxième élément métallique sont identiques.

Avant d'entrer plus en détail dans la description de cette invention, nous précisons les définitions suivantes.

Par monomère comprenant au moins un groupe chélateur d'au moins un deuxième élément métallique, on entend, classiquement, un monomère porteur d'au moins un groupe polymérisable et comprenant au moins un groupe pendant apte à complexer ledit au moins un deuxième élément métallique, ce qui signifie, en d'autres termes, que ledit au moins un deuxième élément métallique est apte à se lier audit groupe pendant par une liaison de coordination par partage d'un doublet libre ou par une liaison ionique par partage d'une charge négative portée par ledit groupe pendant avec ledit au moins un deuxième élément métallique à fixer.

Par élément métallique (que ce soit le premier ou le deuxième élément métallique susmentionné), on entend, classiquement, un élément appartenant à la catégorie des éléments alcalins, des éléments alcalino-terreux, des éléments de transition, des éléments lanthanides, des éléments actinides ou des éléments choisis parmi Al, Ga, Ge, In, Sn, Sb, Tl, Pb, Bi et Po.

De ce procédé innovant d'élaboration de matériaux polymériques dopés par des éléments métalliques découlent les avantages suivants :
- lorsque ledit au moins un premier élément métallique est différent dudit au moins un deuxième élément métallique, il permet l'incorporation, dans les matériaux polymériques, d'une large diversité d'éléments métalliques, du fait que cette incorporation repose sur un double choix : le choix d'au moins un premier monomère comprenant avant polymérisation ledit au moins un premier élément métallique et le choix d'au moins un deuxième monomère dont les unités répétitives résultantes sont aptes à se lier à au moins un deuxième élément métallique par simple liaison de coordination ou liaison ionique ;
- il permet d'effectuer un dopage métallique, voire polymétallique contrôlé, ledit contrôle pouvant être réglé par simple ajustement des ratios du premier monomère et du deuxième monomère lors de l'étape de copolymérisation a) ;
- il est facilement reproductible, notamment en ce qui concerne le taux du premier élément métallique et du deuxième élément métallique présent dans le matériau polymérique du fait que ce taux est lié à la quantité de premier monomère et de deuxième monomère ;
- lorsque ledit premier élément métallique et ledit deuxième élément métallique sont identiques, il permet une meilleure incorporation du monomère métallique dans le matériau résultant, sans qu'il soit nécessaire de mettre en oeuvre l'étape de mise en contact b).

Comme mentionné ci-dessus, le procédé de l'invention comprend, en premier lieu, une étape de copolymérisation d'au moins un premier monomère comprenant au moins un premier élément métallique et d'au moins un deuxième monomère comprenant au moins un groupe chélateur d'au moins un deuxième élément métallique, moyennant quoi l'on obtient un matériau polymérique comprenant des unités répétitives issues de la polymérisation dudit premier monomère, lesquelles unités répétitives comprennent ledit au moins un premier élément métallique et comprenant des unités répétitives issues de la polymérisation dudit deuxième monomère, lesdites unités répétitives comprenant des groupes chélateurs d'au moins un deuxième élément métallique.

Lorsque ledit au moins un premier élément métallique est identique audit au moins un deuxième métallique, le procédé peut ne pas comprendre l'étape de mise en contact b). Il a été, en effet, mis en évidence, par les inventeurs, que la copolymérisation d'un monomère comprenant un élément métallique donné en présence d'un monomère complexant dudit élément métallique permet d'obtenir un matériau présentant une teneur en l'élément métallique donné plus importante que celle obtenue par uniquement la polymérisation du monomère comprenant un élément métallique. En d'autres termes, on obtient un matériau comprenant une teneur en élément métallique se rapprochant de la teneur théorique déterminée à partir de la quantité utilisée de monomère comprenant un élément métallique, ce qui revient à dire que la présence du monomère complexant contribue à améliorer le rendement d'incorporation du monomère métallique dans le matériau.

Toutefois, selon un mode particulier de l'invention, le procédé de l'invention peut comprendre la mise en œuvre de l'étape b), lorsque ledit au moins un premier élément métallique et ledit au moins un deuxième élément métallique sont identiques.

Lorsque ledit au moins un premier élément métallique et ledit au moins un deuxième élément métallique sont différents, le procédé de l'invention comprend la mise en œuvre de l'étape a) et la mise en œuvre de l'étape b).

Ledit premier monomère comprenant au moins un premier élément métallique peut être, avantageusement, un monomère éthylénique comprenant au moins un groupe aromatique auquel est lié un groupe porteur d'au moins un premier élément métallique. De préférence, le groupe éthylénique est également lié au groupe aromatique susmentionné.

Des monomères répondant à cette définition sont des monomères répondant à la formule (I) suivante : 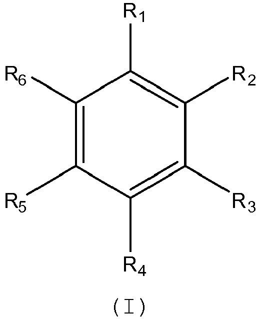 dans laquelle :
- R₁ est un groupe éthylénique ;
- R₂, R₃, R₄, R₅ et R₆ représentent, indépendamment l'un de l'autre, un atome d'hydrogène, un groupe -OH, un groupe amine, un groupe -CHO, un groupe oxime, un groupe hydrazone, un groupe carboxyle -COOH, un atome d'halogène, un groupe trialkylsilane, un groupe -M-L avec M étant le premier élément métallique et L étant un groupe phosphine, et les éventuels sels de ceux-ci, à condition que l'un au moins des groupes R₂ à R₆ représente un groupe -M-L tel que défini ci-dessus.

Par groupe amine, on entend classiquement un groupe amine primaire -NH₂, un groupe amine secondaire (à savoir, un groupe amine dont l'un des atomes d'hydrogène initialement porté par l'atome d'azote est substitué par un autre groupe, tel qu'un groupe alkyle) ou un groupe amine tertiaire (à savoir, un groupe amine dont les deux atomes d'hydrogène initialement portés par l'atome d'azote sont substitués par un autre groupe, tel qu'un groupe alkyle).

Par groupe oxime, on entend classiquement un groupe comprenant la fonction -C=N-OH , par exemple un groupe répondant à la formule -CR'=NOH, où R' représente un atome d'hydrogène, un groupe alkyle, un groupe aryle, un groupe alkylaryle, un groupe perfluoroalkyle, un groupe perfluoroaryle, un groupe perfluoroalkylaryle, un groupe acyle, un groupe carbonyle, un groupe trialkylsilane.

Par groupe hydrazone, on entend classiquement un groupe comprenant la fonction -C=N-N-, par exemple, un groupe répondant à la formule -CR'=N-NR"R‴, dans laquelle R', R" et R‴ représentent, indépendamment l'un de l'autre, un atome d'hydrogène, un groupe alkyle, un groupe aryle, un groupe alkylaryle, un groupe perfluoroalkyle, un groupe perfluoroaryle, un groupe perfluoroalkylaryle, un groupe acyle, un groupe carbonyle ou un groupe trialkylsilane.

Par atome d'halogène, on entend, classiquement, selon l'invention un atome choisi parmi le fluor, le chlore, le brome et l'iode.

Par groupe alkyle, on entend, classiquement, selon l'invention dans ce qui précède et ce qui suit, un groupe alkyle linéaire ou ramifié comprenant de 1 à 20 atomes de carbone, un groupe cyclique comprenant de 3 à 20 atomes de carbones. On peut citer parmi ces groupes le groupe méthyle, éthyle, n-propyle, i-propyle, n-butyle, n-dodécanyle, i-butyle, t-butyle, cyclopropyle, cyclohexyle. Ces groupes peuvent comprendre dans leur chaîne un ou plusieurs atomes choisis parmi O, S, Se et/ou N.

Par groupe aryle, on entend, classiquement, selon l'invention dans ce qui précède et ce qui suit, un groupe de 6 à 20 atomes de carbone. On peut citer, parmi ces groupes, le groupe benzyle, naphtyle, tolyle, biphényle.

Par groupe alkylaryle, on entend, classiquement, selon l'invention dans ce qui précède et ce qui suit, un groupe aryle de même définition que celle donnée précédemment, ledit groupe étant substitué par au moins une chaîne alkyle, pouvant comporter un ou plusieurs atomes d'O, de N, Se et/ou S.

Par groupe perfluoroalkyle, perfluoraryle, perfluoroalkylaryle, on entend des groupes dont les atomes d'hydrogène sont totalement substitués par des atomes de fluor (les alkyles, aryles répondant à la même définition que celle donnée précédemment). Par exemple, on peut citer le trifluorométhyle -CF₃, le perfluoroéthyle, le perfluorobutyle, le perfluoropropyle, le perfluoropentyle, le perfluorophényl C₆F₅-, le perfluorobiphényle, le perfluorobenzyle.

Par groupe phosphine, on entend généralement un groupe répondant à la forme -PX₃ avec X étant un groupe alkyle ou un groupe aryle tel que défini ci-dessus, des groupes phosphines appropriés pouvant être le groupe triéthylphosphine ou le groupe triphénylphosphine.

Des monomères appropriés tombant sous le coup de la définition des monomères de formule (I) susmentionnée sont des monomères dont le groupe -M-L est en position para par rapport au groupe R¹, qui est un groupe éthylénique, un monomère particulier de ce type étant un monomère de formule (II) suivante : 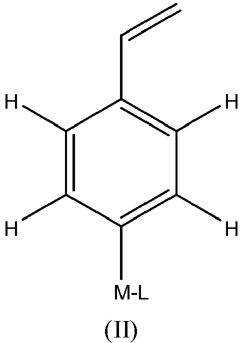 avec M étant, de préférence, Au ou In et L étant, de préférence, un groupe triéthylphosphine ou un groupe triphénylphosphine.

Le premier monomère susmentionné peut être préparé préalablement à la mise en œuvre de l'étape a). Lorsque ce premier monomère est du type de ceux illustrés par la formule (I) ci-dessus, il peut être préparé, dans un premier temps, par une réaction entre un précurseur halogéné (ce précurseur halogéné étant différent des monomères de formule (I) par le fait que le ou les groupes M-L sont remplacés par un atome d'halogène) et un sel de lithium (par exemple, le butyllithium) et, dans un deuxième temps, par une réaction organométallique entre le composé ainsi formé et un sel de formule Z-M-L, où Z est un atome d'halogène, M et L étant, quant à eux, tels que définis ci-dessus.

Plus spécifiquement, lorsqu'il s'agit de préparer un monomère de formule (II) telle que définie ci-dessus, le schéma réactionnel peut être le suivant : 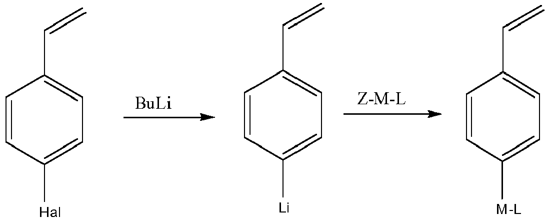 Hal correspondant à un atome d'halogène.

Selon l'invention, le deuxième monomère peut être un monomère comprenant au moins un groupe porteur d'un doublet libre (lequel constitue, ainsi, le groupe chélateur), en particulier un groupe azoté, tel qu'un groupe oxime, un groupe amine, un groupe hétéroaromatique comprenant un ou plusieurs atomes d'azote, un groupe alicyclique comprenant un ou plusieurs atomes d'azote, tels qu'un groupe cyclame.

Plus spécifiquement, le deuxième monomère peut être un monomère cyclique comprenant au moins un groupe azoté, un tel monomère pouvant être choisi parmi :
- les monomères aromatiques comprenant un groupe oxime ;
- les monomères comprenant un groupe amine alicyclique, tel qu'un groupe cyclame ; et
- les monomères hétéroaromatiques comprenant un ou plusieurs atomes d'azote.

Des monomères aromatiques comprenant un groupe oxime peuvent être des monomères aromatiques comprenant au moins un cycle aromatique, lequel cycle est porteur d'au moins un groupe éthylénique, d'au moins un groupe hydroxyde -OH et d'au moins un groupe oxime.

Des monomères particuliers conformes à cette définition répondent à la formule (III) suivante : 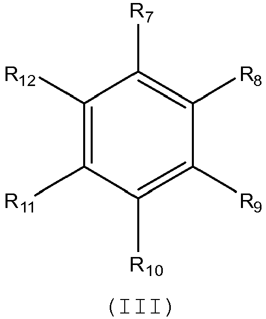 dans laquelle :
- R₇ est un groupe éthylénique ;
- R₈, R₉, R₁₀, R₁₁ et R₁₂ représentent, indépendamment l'un de l'autre, un atome d'hydrogène, un groupe -OH, un groupe amine, un groupe -CHO, un groupe oxime, un groupe hydrazone, un groupe carboxyle -COOH, un atome d'halogène, un groupe trialkylsilane, et les éventuels sels de ceux-ci, à condition que l'un au moins des groupes R₈ à R₁₂ représente un groupe -OH et l'un au moins des groupes R₈ à R₁₂ représente un groupe oxime.

De préférence, le groupe -OH et le groupe oxime sont situés en position *ortho* l'un de l'autre sur un même cycle aromatique, par exemple, sur un cycle phényle.

Ainsi, un monomère particulier répondant à cette définition est un monomère répondant à la formule (IV) suivante :

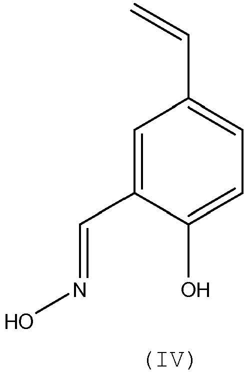

Des monomères comprenant un groupe amine alicyclique, tel qu'un groupe cyclame, peuvent être des monomères de formule (V) suivante : 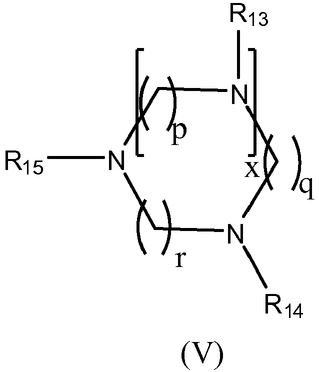 dans laquelle :
- R₁₃, R₁₄ et R₁₅ représentent un groupe styrénique ; et
- p, q, r, x sont des entiers allant de 0 à 20, à la condition que, lorsque x est égal à 0, (r+q) est au moins égale à 2, et lorsque x est égal à 1, au moins l'un des p, q, r est différent de 0.

Un monomère particulier répondant à cette définition peut être un monomère de formule (VI) suivante :

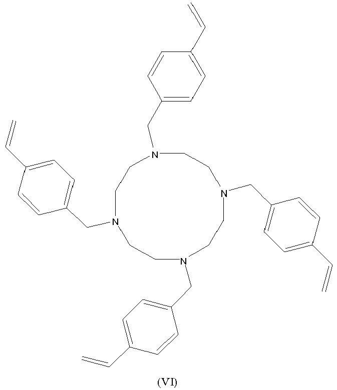

Des monomères hétéroaromatiques comprenant un ou plusieurs atomes d'azote peuvent être des monomères vinylimidazoles, tels qu'un monomère vinylimidazole répondant à la formule (VII) suivante :

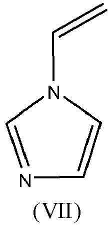

Outre les monomères susmentionnés, l'étape de copolymérisation peut être réalisée en présence d'un ou plusieurs comonomères, lesdits comonomères étant, généralement différents des monomères susmentionnés.

Ces comonomères peuvent être choisis parmi les monomères styréniques ou les monomères acrylates.

Avantageusement, les comonomères comprennent au moins deux groupes éthyléniques, assurant ainsi un rôle d'agent de réticulation. Les matériaux ainsi obtenus présentent une bonne tenue mécanique.

Des comonomères susceptibles d'être utilisés peuvent être des monomères styréniques de formule (VIII) suivante : 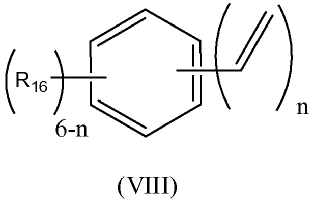 dans laquelle les (6-n) R₁₆, identiques ou différents, représentent un atome d'hydrogène, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés et n est un entier allant de 1 à 3, de préférence, n étant égal à 2.

En particulier, un comonomère approprié peut être le divinylbenzène, en particulier le 1,4-divinylbenzène.

Des comonomères susceptibles d'être utilisés peuvent être également des composés acrylates de formule (IX) suivante : 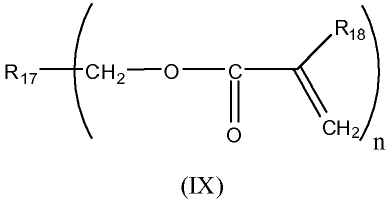 dans laquelle R₁₇ représente un groupe alkyle, R₁₈ représente H ou un groupe alkyle et n étant un entier allant de 1 à 3.

En particulier, un comonomère approprié de ce type peut être le triméthylolpropanetriacrylate (connu sous l'abréviation TMPTA) de formule (X) suivante :

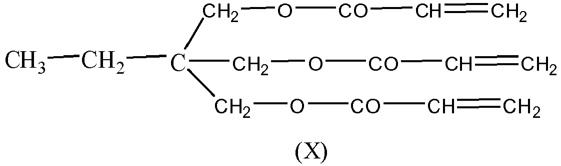

L'étape de copolymérisation est réalisée, de préférence, en présence d'au moins un initiateur de polymérisation, tel qu'un amorceur radicalaire classiquement choisi parmi les composés peroxydes, les azonitriles (tel que le 2,2'-azobisisobutyronitrile (connu sous l'abréviation AiBN), le 2,2'-azodi(2,4-diméthyl-4-méthoxyvaléronitrile) (également dénommé V70), les azoesters, les azoamides.

L'initiateur de polymérisation peut être introduit, dans le milieu de polymérisation, selon des quantités variables, par exemple, selon des quantités pouvant aller de 0 à 50% massique, par rapport à la masse totale de monomères mis en jeu.

L'étape de polymérisation peut être réalisée, en outre, en présence d'un solvant porogène, qui peut être un solvant organique polaire, apolaire et peut être choisi parmi les solvants éthers (tels que le tétrahydrofurane, le 2-méthyltétrahydrofurane, le 3-méthyltétrahydrofurane), le diméthylsulfoxyde, des solvants phthalates (tels que le diméthylphthalate, le dibutylphthalate), des solvants alcooliques (tels que le méthanol, l'éthanol), des solvants aromatiques (tels que le toluène, le fluorobenzène), des solvants cétones et des mélanges de ceux-ci.

Le mode de polymérisation peut être de tout type, tel que la polymérisation thermique (par exemple, en chauffant de 50 à 150°C) ou tel que la polymérisation photochimique en présence d'ultraviolets.

En particulier, l'étape a) peut être mise en œuvre en présence d'un monomère de formule (II) avec M étant Au et L étant un groupe triéthylphosphine, un monomère de formule (VII) et du divinylbenzène.

A l'issue de l'étape a), le matériau peut se présenter sous forme d'un gel, lequel peut être, avant l'éventuelle mise en œuvre de l'étape b), soumis à un lavage pour éliminer le ou les solvants organiques utilisés lors de l'étape a) suivi éventuellement, le cas échéant, d'une opération de remplacement du solvant de lavage présent dans le matériau par le solvant utilisé pour l'étape b).

L'étape b) du procédé consiste en la mise en contact du matériau obtenu à l'étape a) avec une solution comprenant ledit au moins deuxième élément métallique, moyennant quoi ledit au moins deuxième élément métallique est complexé aux groupes chélateurs susmentionnés.

La solution peut consister en une solution aqueuse ou une solution organique (par exemple, une solution alcoolique comprenant du méthanol et/ou de l'éthanol), dans laquelle est solubilisé un sel ou un complexe métallique de l'élément métallique à complexer avec le matériau polymérique obtenu à l'étape a).

A titre d'exemples de sel ou complexe métallique d'un élément métallique, on peut citer les chlorures, bromures, fluorures, iodures, iodates, nitrates, sulfates, sulfonates, sulfites, nitrites, phosphates, phosphites, cyanures, azidures, hydroxyles, chlorates, perchlorates, acétates, trifluorométhanesulfonates, trifluoroacétates, trichloroacétates, alcoxydes, acétylacétonates, cyclopentadiényles, alcynures métalliques.

Des exemples spécifiques de sel métallique peuvent être HAuCl₄, CuCl₂, Zn(NO₃)₂, CrCl₃ ou Co(NO₃)₂.

D'un point de vue concret, l'étape de mise en contact b) peut consister à immerger le matériau obtenu à l'étape a) dans une solution comprenant un sel ou complexe d'au moins un deuxième élément métallique pendant un temps approprié pour imprégner le matériau obtenu à l'étape a) et permettre audit au moins un deuxième élément métallique de se complexer avec les unités répétitives du matériau obtenu à l'étape a) issues de la polymérisation dudit au moins un deuxième monomère, formant ainsi des unités constituant des complexes de coordination.

On précise que, par complexe de coordination, on entend classiquement un édifice polyatomique comprenant ledit au moins un deuxième élément métallique autour duquel des groupes appartenant aux unités répétitives susmentionnées sont liés par des liaisons de coordination, la liaison de coordination étant créée par apport d'un doublet d'électrons appartenant auxdites unités répétitives dans une orbitale vide de l'élément métallique.

Après cette étape b), le procédé de l'invention peut comprendre une étape de lavage du matériau ainsi obtenu, de sorte à éliminer la solution comprenant un sel ou complexe d'élément métallique stagnante dans la porosité du matériau. Cette étape de lavage peut consister à mettre en contact la matériau obtenu à l'issue de l'étape b), par exemple, pendant une durée d'au moins 24 heures, avec un solvant qui va s'échanger avec le solvant comprenant le sel ou complexe d'élément métallique. Cette étape de lavage peut être renouvelée une ou plusieurs fois.

Enfin, le procédé peut comprendre, après l'étape b) et l'éventuelle étape de lavage ou après l'étape a), lorsque celle-ci est mise en œuvre seule, une étape de séchage du matériau obtenu. Cette étape de séchage peut consister à soumettre ledit matériau à un chauffage, une lyophilisation ou à un séchage au dioxyde de carbone CO₂ supercritique.

De préférence, l'étape de séchage est une étape de séchage supercritique au CO₂. Pour ce faire, cette étape de séchage supercritique au CO₂ peut être précédée d'une étape d'échange de solvant consistant à remplacer le solvant présent dans la porosité du matériau par un solvant miscible au CO₂. Cette étape de séchage supercritique au CO₂ permet notamment de respecter l'intégrité physique du matériau.

L'on obtient, grâce au procédé de l'invention, des matériaux polymériques dopés par un ou plusieurs éléments métalliques, présentant un pourcentage élevé d'élément métallique et avec une répartition à l'échelle moléculaire de l'élément métallique au sein du matériau.

En particulier, il peut s'agir de matériaux polymériques dopés par un seul élément métallique (ce qui est le cas lorsque le premier élément métallique est identique au deuxième élément métallique). Par exemple, il peut s'agir d'un matériau polymérique dopé par de l'or, présentant une masse volumique inférieure à 100 mg/cm³.

En particulier encore, il peut s'agir de matériaux polymériques dopés par deux éléments métalliques distincts, ce matériau pouvant être qualifiés de matériaux polymériques « bimétalliques ».

Par exemple, le premier élément métallique peut être de l'or et le deuxième élément métallique peut être du cuivre.

Même si cela découle de manière claire de la définition de l'invention (à savoir que le matériau comprend au moins un premier élément métallique intégré dans les unités répétitives issues de la polymérisation dudit au moins un premier monomère et au moins un deuxième élément métallique intégré dans les unités répétitives issues de la polymérisation dudit au moins un deuxième monomère, ledit deuxième élément métallique étant intégré par complexation après l'étape de polymérisation), on précise qu'un matériau bimétallique conforme à l'invention ne correspond pas à :
- un polymère « monométallique » greffé sur des particules monométalliques ;
- un polymère contenant des particules, agrégats ou clusters bimétalliques.

Ainsi, l'invention a trait à des matériaux polymériques dopés par au moins un premier élément métallique et au moins un deuxième élément métallique tels que définis ci-dessus susceptibles d'être obtenus par un procédé tel que défini ci-dessus, les matériaux se présentant classiquement sous forme de mousses.

Ces matériaux peuvent être utilisés dans de nombreux domaines nécessitant la mise en œuvre de matériaux dopés par des éléments métalliques et notamment dans l'élaboration d'éléments de cibles laser utilisés, en particulier, dans des expériences de fusion par confinement inertiel.

Ils peuvent être aussi utilisés en tant que catalyseur, en tant que matériaux luminescents ou en tant que matériaux magnétiques.

En particulier, ils peuvent être utilisés en tant qu'élément de cible laser.

Enfin, ils peuvent être utilisés en tant que matériaux à empreinte ionique. Pour ce faire, les matériaux dopés obtenus par le procédé de l'invention peuvent être soumis à un traitement acide, destiné à éliminer une partie des éléments métalliques complexés dans ledit matériau. Les sites vacants constituent ainsi des empreintes spécifiques de l'élément spécifique du métal initialement introduit. De ce traitement, il en résulte un matériau dit « à empreinte ionique », capable de piéger sélectivement l'élément métallique « imprimé » lors d'une mise en contact avec un fluide comprenant ledit élément métallique. Ce type de matériaux peut ainsi être utilisé pour l'extraction sélective de métaux, notamment, lors du retraitement d'effluents de combustibles nucléaires, tel que la séparation des lanthanides, ou encore la décontamination de fluides biologiques.

L'invention va, à présent, être décrite en référence aux exemples suivants donnés à titre illustratif et non limitatif.

### EXPOSÉ DÉTAILLÉ DE MODES DE RÉALISATION PARTICULIERS

### EXEMPLE 1

Le présent exemple illustre la synthèse d'une mousse polymérique dopée par de l'or conforme à l'invention.

Pour ce faire, trois étapes sont mises en œuvre :
- une étape de synthèse d'un monomère métallique (étape a) ;
- une étape de polymérisation dudit monomère en présence d'un autre monomère complexant et de complexation du matériau résultant (étape b) ;
- une étape de séchage du matériau résultant pour former une mousse (étape c).

### a)Synthèse d'un monomère métallique

Cette étape a trait, plus spécifiquement, à la préparation d'un monomère métallique répondant à la formule suivante : 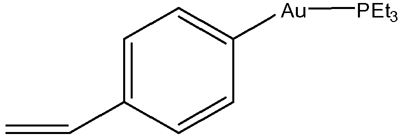 dans laquelle Et correspondant à un groupe éthyle, ce monomère étant dénommé, par la suite, StyAuPEt₃.

Pour ce faire, du p-bromostyrène (0,75 g) est solubilisé dans du tétrahydrofurane (8 mL) dans un tube de Schlenk sous atmosphère inerte. Après avoir refroidi le contenu du tube à -80°C, du butyllithium (1,62 mL) est ajouté. A la solution résultante, est ajouté goutte à goutte du chlorotriéthylphosphine d'or ClAuPEt (1 g) préalablement solubilisé dans du tétrahydrofurane (16 mL). Le mélange résultant est maintenu, sous agitation, à -80°C pendant 1 heure puis la température remonte progressivement à la température ambiante. L'agitation est maintenue pendant toute une nuit. Puis le mélange est hydrolysé, à une température de 0°C, avec une solution saturée de chlorure d'ammonium (20 mL) puis ce mélange est soumis à une extraction avec de l'éther diéthylique (20 mL) à deux reprises. Les phases organiques réunies sont lavées avec une solution de chlorure de sodium saturée (15 mL) puis séchées avec du sulfate de sodium avant d'être évaporées par rotation sous vide. Le produit résultant est conservé à 4°C.

Il correspond au monomère de formule explicitée ci-dessus, comme l'attestent les résultats de RMN ¹H, RMN ¹³C et RMN ³¹P ci-dessous.

RMN¹H (THF-d8) : δ (ppm) : 1,22 (9H₈, m, J=7Hz); 1,80 (6H₇, q, J=7Hz); 5,11 (1H₆, dd, J=11/1,2 Hz); 5,69 (1H₆, dd, J=17,6/1,2 Hz); 6,69 (1H₅, dd, J=11/17,6 Hz); 7,33 (2Har, d, J=7,8 Hz); 7,49 (2Har, d, J=7,8 Hz)

RMN¹³C (THF-d8): δ (ppm) : 8,9 (3C₈) ; 17,8 (3C₇, d, J=30 Hz) ; 111,3 (C₆) ; 125,0 (2C₃) ; 134,4 (C₄) ; 137,8 ; 139,2 (2C₂ ou 1C₅) ; 175,9 (C₁, d, J=116 Hz)

RMN³¹P (THF-d8) : δ (ppm) : 42

### b) Polymérisation dudit monomère en présence d'un autre monomère complexant

Dans un ballon, le monomère StyAuPtEt₃ préparé à l'étape a) (0,1232 g) est solubilisé dans du tétrahydrofurane (1 mL). Un monomère complexant, le 1-vinylimidazole (dénommé VI) (0,1232 g), un amorceur, l'azobisisobutyronitrile (0,0308 g), un agent réticulant, le divinylbenzène (0,0616 g) et un solvant porogène, le phtalate de diéthyle (6 mL) sont ajoutés au monomère StyAuPtEt₃ solubilisé. La solution est dégazée à l'argon pendant 3 minutes. Elle est ensuite injectée dans des moules, qui sont placés dans une enceinte inerte. La réaction de polymérisation est effectuée à 60°C pendant 24 heures. Les gels résultants sont ensuite démoulés dans une solution d'éthanol. L'éthanol est changé trois fois, afin d'éliminer le phtalate de diéthyle et le tétrahydrofurane.

Les gels sont ensuite immergés dans une solution (18 mL) comprenant un sel d'or HAuCl₄.3H₂O (Au : 8,9 mg/mL) pendant une durée de 7 jours. Les gels sont ensuite soumis à une agitation mécanique.

### c) Séchage du matériau

Les gels sont ensuite séchés, en autoclave, par séchage supercritique au CO₂, dont le cycle de pressions et de températures est le suivant : 50°C à 180 bars pendant 30 heures avec un débit de CO₂ de 2,5 kg.h⁻¹. La dépression de l'autoclave est ensuite réalisée à 50°C à 0,5 bar.min⁻¹ jusqu'à température ambiante.

### EXEMPLE 2

Cet exemple a trait à la préparation d'une mousse polymérique dopée par de l'or et du cuivre conforme à l'invention.

Pour ce faire, deux étapes sont mises en œuvre :
- une étape de polymérisation du monomère StyAuPEt₃ en présence d'un autre monomère complexant et de complexation du matériau résultant (étape b) ;
- une étape de séchage du matériau résultant pour former une mousse (étape c).

### a)Polymérisation du monomère StyAuPEt₃ en présence d'un autre monomère complexant et complexation du matériau résultant

Dans un ballon, le monomère StyAuPtEt₃ (0,1232 g) est solubilisé dans du tétrahydrofurane (1 mL). Un monomère complexant, le 1-vinylimidazole (dénommé VI) (0,1232 g), un amorceur, l'azobisisobutyronitrile (0,0308 g), un agent réticulant, le divinylbenzène (0,0616 g) et un solvant porogène, le phtalate de diéthyle (6 mL) sont ajoutés au monomère StyAuPtEt₃ solubilisé. La solution est dégazée à l'argon pendant 3 minutes. Elle est ensuite injectée dans des moules, qui sont placés dans une enceinte inerte. La réaction de polymérisation est effectuée à 60°C pendant 24 heures. Les gels résultants sont ensuite démoulés dans une solution d'éthanol. L'éthanol est changé trois fois, afin d'éliminer le phtalate de diéthyle et le tétrahydrofurane.

Les gels sont ensuite immergés dans une solution (18 mL) comprenant un sel de cuivre CuCl₂ (Cu : 8,9 mg/mL) pendant une durée de 24 heures. Les gels sont ensuite soumis à une agitation mécanique.

Le gel est ensuite lavé trois fois dans l'éthanol après immersion dans la solution de cuivre.

### b) Séchage du matériau

Les gels sont ensuite séchés, en autoclave, par séchage supercritique au CO₂, dont le cycle de pressions et de températures est le suivant : 50°C à 180 bars pendant 30 heures avec un débit de CO₂ de 2,5 kg.h⁻¹. La dépression de l'autoclave est ensuite réalisée à 50°C à 0,5 bar.min⁻¹ jusqu'à température ambiante.

### EXEMPLE 3

Cet exemple a pour but de démontrer la capacité du procédé de l'invention à permettre l'optimisation de la teneur en élément métallique dans un matériau polymérique mais aussi, dans une certaine mesure, les propriétés structurelles du matériau.

Pour ce faire, il a été mis en œuvre deux essais comparatifs (essais a) et b) ci-dessous), pour lesquels il a été mesuré, respectivement la masse volumique ρ (en mg/cm³) et la teneur en or (en % massique), de sorte à pouvoir comparer ces valeurs à celles obtenues avec le matériau obtenu à l'exemple 1.

Les protocoles opératoires de préparation des matériaux des essais a) et des essais b) sont illustrés ci-dessous.

### a)Essai a

Le présent exemple illustre la synthèse d'une mousse polymérique dopée par de l'or obtenue par copolymérisation du monomère StyAuPEt₃ avec du divinylbenzène (respectivement 50% massique de StyAuPEt₃ et 50% massique de divinylbenzène)

Pour ce faire, le monomère métallique StyAuPt₃ (0,154 g) est solubilisé avec du THF (2 mL) . L'amorceur (AiBN, 0,0308 g), l'agent réticulant divinylbenzène (0,154 g) et le solvant porogène phtalate de diéthyle (6 mL) sont ajoutés. La solution est dégazée à l'argon pendant 3 minutes. Elle est injectée dans des moules qui sont placés dans une enceinte inerte. La polymérisation est effectuée à 60°C pendant 24 heures. Les gels sont ensuite démoulés dans une solution d'éthanol. L'éthanol est changé trois fois afin d'enlever le DEP et le THF. Ensuite, les gels sont séchés par voie supercritique au CO₂.

La mousse obtenue présente une masse volumique ρ de 52±2 (en mg/cm³) et une teneur en or de 10,1±0,4 (en % massique).

### b) Essai b

Le présent exemple illustre la synthèse d'une mousse polymérique dopée par de l'or obtenue par copolymérisation du monomère VI avec du divinylbenzène (respectivement 50% massique de monomère VI et 50% massique de divinylbenzène) suivie d'une imprégnation par un sel d'or.

Pour ce faire, dans un ballon, Le monomère complexant 1-vinylimidazole (VI, Sigma Aldrich) (0,154 g), l'amorceur (AIBN, 0,0308 g), l'agent réticulant divinylbenzène (DVB, 0,154 g) et le solvant porogène diéthylphtalate (DEP, 6 mL, Sigma Aldrich) sont ajoutés. La solution est dégazée à l'argon pendant 3 minutes. Elle est injectée dans des moules qui sont placés dans une enceinte inerte. La polymérisation est effectuée à 60°C pendant 24 heures. Les gels sont ensuite démoulés dans une solution d'éthanol. L'éthanol est changé trois fois afin d'enlever le DEP. Ensuite, les gels sont immergés dans une solution d'or (HAuCl₄ dans l'éthanol (18 mL), Au = 8,9 mg/mL) pendant 7 jours. Les gels résultants sont ensuite lavés trois fois à l'éthanol puis séchés par voie supercritique au CO₂.

La mousse obtenue présente une masse volumique ρ de 89±4 (en mg/cm³) et une teneur en or de 26±1 (en % massique).

En comparaison, la mousse obtenue à l'exemple 1 selon le procédé de l'invention présente une masse volumique ρ de 71±4 (en mg/cm³) et une teneur en or de 34,4±1,4 (en % massique).

Ainsi, l'association d'un monomère métallique et d'un monomère complexant selon les modalités du procédé de l'invention permet d'optimiser les propriétés du matériau résultant. Plus spécifiquement, dans le cadre de la synthèse de mousses polymériques à base d'or, l'association du monomère métallique StyAuPEt₃ avec le monomère complexant VI permet d'augmenter la teneur en élément métallique par rapport à celle obtenue avec le matériau de l'essai a) et celui de l'essai b). De plus, le procédé de l'invention permet d'obtenir des matériaux massifs présentant une teneur métallique élevée et une masse volumique inférieure à celle obtenue avec le matériau obtenu avec le monomère métallique de l'essai a) et supérieure à celle obtenue avec le matériau obtenu avec le monomère complexant de l'essai b). Ainsi, le procédé de l'invention permet d'optimiser la teneur en élément métallique mais aussi de contrôler, dans une certaine mesure, les propriétés structurelles du matériau.

### EXEMPLE 4

Cet exemple a pour but de démontrer la capacité du procédé de l'invention à permettre l'obtention de matériaux renforcés mécaniquement par rapport à des matériaux réalisés sans l'étape d'imprégnation conforme à l'invention.

Pour ce faire, il a été mis en œuvre deux essais :
- un essai comparatif (essai a) non conforme à l'invention illustrant la préparation d'une mousse obtenue, entre autres, par copolymérisation de StyAuPEt₃ et du monomère VI ;
- un essai conforme à l'invention (essai b) préparation d'une mousse obtenue, entre autres, par copolymérisation de StyAuPEt₃ et du monomère VI suivie d'une imprégnation par un sel d'or.

Les protocoles opératoires de préparation des matériaux des essais a) et des essais b) sont illustrés ci-dessous.

### a)Essai a

Le présent exemple illustre la synthèse d'une mousse polymérique obtenue par un procédé non conforme à l'invention, par copolymérisation du monomère StyAuPEt₃ avec du divinylbenzène.

Pour ce faire, dans un ballon, le monomère métallique StyAuPEt₃ (0,1232 g) est solubilisé avec du THF (2 mL, Sigma Aldrich). Le monomère complexant 1-vinylimidazole (VI, Sigma Aldrich) (0,1232 g), l'amorceur (AIBN, 0,0308 g), l'agent réticulant divinylbenzène (DVB, 0,0616 g) et le solvant porogène diéthylphtalate (DEP, 6 mL, Sigma Aldrich) sont ajoutés. La solution est dégazée à l'argon pendant 3 minutes. Elle est injectée dans des moules qui sont placés dans une enceinte inerte. La polymérisation est effectuée à 60°C pendant 24 heures. Les gels sont ensuite démoulés dans une solution d'éthanol. L'éthanol est changé trois fois afin d'enlever le DEP. Les gels résultants sont ensuite séchés par voie supercritique au CO₂.

La mousse obtenue, après séchage supercritique au CO₂, présente une tenue mécanique médiocre, ce qui se matérialise notamment par une déformation de celle-ci lors du séchage. De plus, la mousse obtenue est facilement cassable.

### b) Essai b

Le présent exemple illustre la synthèse d'une mousse polymérique conforme à l'invention.

Pour ce faire, dans un ballon, le monomère métallique StyAuPEt₃ (0,1232 g) est solubilisé avec du THF (2 mL, Sigma Aldrich). Le monomère complexant 1-vinylimidazole (VI, Sigma Aldrich) (0,1232 g), l'amorceur (AIBN, 0,0308 g), l'agent réticulant divinylbenzène (DVB, 0,0616 g), le solvant porogène diéthylphtalate (DEP, 6 mL, Sigma Aldrich) sont ajoutés. La solution est dégazée à l'argon pendant 3 minutes. Elle est injectée dans des moules qui sont placés dans une enceinte inerte. La polymérisation est effectuée à 60°C pendant 24 heures. Les gels sont ensuite démoulés dans une solution d'éthanol. L'éthanol est changé trois fois afin d'enlever le DEP. Ensuite, les gels sont immergés dans une solution d'or (HAuCl₄ dans l'éthanol (18 mL), Au = 8,9 mg/mL) pendant 7 jours. Les gels résultants sont ensuite lavés trois fois à l'éthanol puis séchés par voie supercritique au CO₂.

A l'issue du séchage supercritique au CO₂, la mousse obtenue est faiblement déformée, ce qui atteste de sa meilleure tenue mécanique, qui peut être attribuée à la complexation du sel d'argent par les unités répétitives issues de la polymérisation du monomère VI.

De par sa meilleure tenue mécanique, la mousse est ainsi plus facilement manipulable.

### EXEMPLE 5

Cet exemple a pour but de démontrer la capacité du procédé de l'invention à permettre l'optimisation de la teneur en élément métallique grâce à la présence du monomère complexant.

Pour ce faire, il a été mis en œuvre trois essais (essais a), b) et c) ci-dessous), pour lesquels il a été déterminé la teneur théorique en or (en % massique) et pour lesquels il a été mesuré la teneur en or (en % massique).

Les protocoles opératoires de préparation des matériaux des essais a), b) et c) sont illustrés ci-dessous.

### a)Essai a

Le présent exemple illustre la synthèse d'une mousse polymérique obtenue par polymérisation du monomère StyAuPEt₃ et de divinylbenzène (50% massique de chacun des monomères)

Pour ce faire, dans un ballon, le monomère métallique StyAuPEt₃ (0,154 g) est solubilisé avec du THF (1 mL, Sigma Aldrich). L'amorceur (AIBN, 0,0308 g), l'agent réticulant divinylbenzène (DVB, 0,154 g), le solvant porogène diéthylphtalate (DEP, 6 mL, Sigma Aldrich) sont ajoutés. La solution est dégazée à l'argon pendant 3 minutes. Elle est injectée dans des moules qui sont placés dans une enceinte inerte. La polymérisation est effectuée à 60°C pendant 24 heures. Les gels sont ensuite démoulés dans une solution d'éthanol. L'éthanol est changé trois fois afin d'enlever le DEP et le THF. Ensuite, les gels sont séchés par voie supercritique au CO₂.

La mousse obtenue, après séchage supercritique au CO₂, présente une teneur en Au de 12±3 (en % massique), tandis que la teneur théorique en Au a été estimée à 23 (en % massique).

### b) Essai b

Le présent exemple illustre la synthèse d'une mousse polymérique conforme à l'invention (respectivement 40% massique de StyAuPEt₃, 40% massique de monomère VI et 20% massique de divinylbenzène).

Pour ce faire, dans un ballon, le monomère métallique StyAuPEt₃ (0.1232 g) est solubilisé avec du THF (2 mL, Sigma Aldrich). Le monomère complexant 1-vinylimidazole (VI, Sigma Aldrich) (0,1232 g), l'amorceur (AIBN, 0,0308 g), l'agent réticulant divinylbenzène (DVB, 0,0616 g), le solvant porogène diéthylphtalate (DEP, 6 mL, Sigma Aldrich) sont ajoutés. La solution est dégazée à l'argon pendant 3 minutes. Elle est injecté dans des moules qui sont placés dans une enceinte inerte. La polymérisation est effectuée à 60°C pendant 24 heures. Les gels sont ensuite démoulés dans une solution d'éthanol. L'éthanol est changé trois fois afin d'enlever le DEP. Les gels résultants sont ensuite séchés par voie supercritique au CO₂.

La mousse obtenue, après séchage supercritique au CO₂, présente une teneur en Au de 21,2±0,8 (en % massique), tandis que la teneur théorique en Au a été estimée à 19 (en % massique).

### b) Essai c

Le présent exemple illustre la synthèse d'une mousse polymérique conforme à l'invention (respectivement 50% massique de StyAuPEt₃, 39% massique de monomère VI et 11% massique de divinylbenzène).

Pour ce faire, dans un ballon, le monomère métallique StyAuPEt₃ (0,154 g) est solubilisé avec du THF (2 mL, Sigma Aldrich). Le monomère complexant 1-vinylimidazole (VI, Sigma Aldrich) (0,1232 g), l'amorceur (AIBN, 0,0308 g), l'agent réticulant divinylbenzène (DVB, 0,0308 g), le solvant porogène diéthylphtalate (DEP, 6 mL, Sigma Aldrich) sont ajoutés. La solution est dégazée à l'argon pendant 3 minutes. Elle est injectée dans des moules qui sont placés dans une enceinte inerte. La polymérisation est effectuée à 60°C pendant 24 heures. Les gels sont ensuite démoulés dans une solution d'éthanol. L'éthanol est changé trois fois afin d'enlever le DEP. Les gels résultants sont ensuite séchés par voie supercritique au CO₂.

La mousse obtenue, après séchage supercritique au CO₂, présente une teneur en Au de 22±0,9 (en % massique), tandis que la teneur théorique en Au a été estimée à 24 (en % massique).

En conclusion de ces essais, l'on peut en déduire que la présence du monomère complexant VI dans la mise en œuvre du procédé de l'invention permet d'optimiser, sans étape d'imprégnation, la teneur en monomère métallique. Il en résulte que le teneur en or dans le matériau est proche de la teneur théorique. Sans être lié par la théorie, on peut attribuer cela au fait que le monomère complexant en établissant des liaisons de coordination avec l'or compris dans le monomère métallique permet une meilleure incorporation du monomère métallique dans le matériau résultant.

## Revendications

1. Procédé de préparation d'un matériau polymérique dopé par au moins un premier élément métallique et au moins un deuxième élément métallique, ledit, au moins, un premier élément métallique et ledit, au moins un deuxième élément métallique étant identiques ou différents l'un de l'autre, ledit procédé comprenant :
a) une étape de copolymérisation d'au moins un premier monomère comprenant au moins un premier élément métallique et d'au moins un deuxième monomère comprenant au moins un groupe chélateur d'au moins un deuxième élément métallique, moyennant l'on obtient un matériau polymérique comprenant des unités répétitives issues de la polymérisation dudit premier monomère, lesquelles unités répétitives comprennent ledit au moins un premier élément métallique et comprenant des unités répétitives issues de la polymérisation dudit deuxième monomère, lesdites unités répétitives comprenant des groupes chélateurs d'au moins un deuxième métallique ; et
lorsque ledit premier élément métallique est différent dudit deuxième élément métallique, ledit procédé comprenant, en outre une étape b) de mise en contact du matériau obtenu à l'étape a) avec une solution comprenant ledit au moins deuxième élément métallique, moyennant quoi ledit au moins deuxième élément métallique est complexé aux groupes chélateurs susmentionnés,
cette étape b) étant facultative lorsque ledit premier élément métallique et ledit deuxième élément métallique sont identiques.

2. Procédé de préparation d'un matériau selon la revendication 1, dans lequel, lorsque ledit au moins un premier élément métallique et ledit au moins un deuxième élément métallique sont identiques, le procédé ne comprend pas la mise en œuvre de l'étape b).

3. Procédé de préparation d'un matériau selon la revendication 1, dans lequel, lorsque ledit au moins un premier élément métallique et ledit au moins un deuxième élément métallique sont différents, le procédé comprend la mise en œuvre de l'étape a) et la mise en œuvre de l'étape b).

4. Procédé de préparation d'un matériau selon l'une quelconque des revendications précédentes, dans lequel le premier monomère est un monomère éthylénique comprenant au moins un groupe aromatique auquel est lié un groupe porteur d'au moins un premier élément métallique.

5. Procédé de préparation d'un matériau selon l'une quelconque des revendications précédentes, dans lequel le premier monomère répond à la formule (I) suivante : 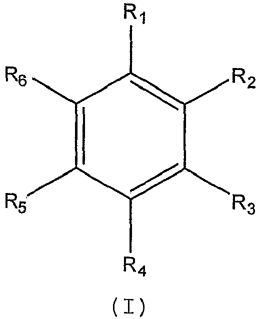 dans laquelle :
- R₁ est un groupe éthylénique ;
- R₂, R₃, R₄, R₅ et R₆ représentent, indépendamment l'un de l'autre, un atome d'hydrogène, un groupe -OH, un groupe amine, un groupe -CHO, un groupe oxime, un groupe hydrazone, un groupe carboxyle -COOH, un atome d'halogène, un groupe trialkylsilane, un groupe -M-L avec M étant le premier élément métallique et L étant un groupe phosphine, et les éventuels sels de ceux-ci, à condition que l'un au moins des groupes R₂ à R₆ représente un groupe -M-L tel que défini ci-dessus.

6. Procédé de préparation d'un matériau selon l'une quelconque des revendications précédentes, dans lequel le deuxième monomère comprend au moins un groupe porteur d'un doublet libre.

7. Procédé de préparation d'un matériau selon l'une quelconque des revendications précédentes, dans lequel le deuxième monomère est un monomère cyclique comprenant au moins un groupe azoté choisi parmi :
- les monomères aromatiques comprenant un groupe oxime ;
- les monomères comprenant un groupe amine alicyclique, tel qu'un groupe cyclame ; et
- les monomères hétéroaromatiques comprenant un ou plusieurs atomes d'azote.

8. Procédé de préparation d'un matériau selon l'une quelconque des revendications précédentes, dans lequel le deuxième monomère est un monomère de formule (III) suivante : 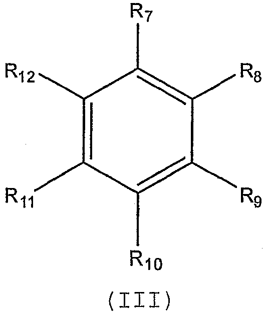 dans laquelle :
- R₇ est un groupe éthylénique ;
- R₈, R₉, R₁₀, R₁₁ et R₁₂ représentent, indépendamment l'un de l'autre, un atome d'hydrogène, un groupe -OH, un groupe amine, un groupe -CHO, un groupe oxime, un groupe hydrazone, un groupe carboxyle -COOH, un atome d'halogène, un groupe trialkylsilane, et les éventuels sels de ceux-ci, à condition que l'un au moins des groupes R₈ à R₁₂ représente un groupe -OH et l'un au moins des groupes R₈ à R₁₂ représente un groupe oxime.

9. Procédé de préparation d'un matériau selon la revendication 7, dans lequel le deuxième monomère est un monomère de formule (V) suivante : 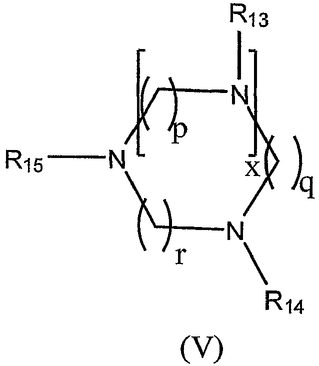 dans laquelle :
- R₁₃, R₁₄ et R₁₅ représentent un groupe styrénique ; et
- p, q, r, x sont des entiers allant de 0 à 20, à la condition que, lorsque x est égal à 0, (r+q) est au moins égale à 2, et lorsque x est égal à 1, au moins l'un des p, q, r est différent de 0.

10. Procédé de préparation d'un matériau selon la revendication 7, dans lequel le deuxième monomère est un monomère vinylimidazole répondant à la formule (VII) suivante :

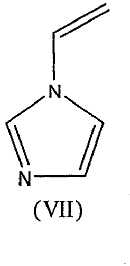

11. Procédé de préparation d'un matériau selon l'une quelconque des revendications précédentes, dans lequel l'étape de copolymérisation est réalisée en présence d'un ou plusieurs comonomères choisis parmi les monomères styréniques et les monomères acrylates.

12. Procédé selon la revendication 11, dans lequel le ou les comonomères comprennent au moins deux groupes éthyléniques.

13. Procédé selon l'une quelconque des revendications précédentes, comprenant, en outre, une étape de séchage du matériau issu de l'étape a) ou l'étape b).

14. Procédé selon l'une quelconque des revendications précédentes, dans lequel le premier élément métallique est de l'or et le deuxième élément métallique est du cuivre.

15. Procédé selon l'une quelconque des revendications précédentes, dans lequel le matériau obtenu à l'issue du procédé est une mousse.

## Patentansprüche

1. Verfahren zur Herstellung eines polymeren Materials, das mit wenigstens einem ersten metallischen Element und wenigstens einem zweiten metallischen Element dotiert ist, wobei das wenigstens eine erste metallische Element und das wenigstens eine zweite metallische Element gleich oder voneinander verschieden sind, wobei das Verfahren umfasst:
a) einen Schritt der Copolymerisation wenigstens eines ersten Monomers, das wenigstens ein erstes metallisches Element umfasst, und wenigstens eines zweiten Monomers, das wenigstens eine chelatbildende Gruppe wenigstens eines zweiten metallischen Elements umfasst, wodurch ein polymeres Material erhalten wird, das sich wiederholende Einheiten umfasst, die aus der Polymerisation des ersten Monomers hervorgehen, wobei die wiederkehrenden Einheiten das wenigstens eine erste metallische Element umfassen und wiederkehrende Einheiten umfassen, die aus der Polymerisation des zweiten Monomers stammen, wobei die wiederkehrenden Einheiten chelatbildende Gruppen von wenigstens einem zweiten metallischen Element umfassen; und wenn das erste metallische Element von dem zweiten metallischen Element verschieden ist, umfasst das Verfahren ferner einen Schritt b) des Inkontaktbringens des in Schritt a) erhaltenen Materials mit einer Lösung, die das wenigstens zweite metallische Element enthält, wodurch das wenigstens zweite metallische Element mit den oben genannten chelatbildenden Gruppen komplexiert wird,
wobei dieser Schritt b) optional ist, wenn das erste metallische Element und das zweite metallische Element identisch sind.

2. Verfahren zur Herstellung eines Materials nach Anspruch 1, wobei, wenn das wenigstens eine erste metallische Element und das wenigstens eine zweite metallische Element identisch sind, das Verfahren nicht die Durchführung von Schritt b) umfasst.

3. Verfahren zur Herstellung eines Materials nach Anspruch 1, wobei, wenn das wenigstens eine erste metallische Element und das wenigstens eine zweite metallische Element verschieden sind, das Verfahren die Durchführung von Schritt a) und die Durchführung von Schritt b) umfasst.

4. Verfahren zur Herstellung eines Materials nach einem der vorhergehenden Ansprüche, wobei das erste Monomer ein ethylenisches Monomer ist, das wenigstens eine aromatische Gruppe umfasst, an die eine Trägergruppe für wenigstens ein erstes metallisches Element gebunden ist.

5. Verfahren zur Herstellung eines Materials nach einem der vorhergehenden Ansprüche, wobei das erste Monomer der folgenden Formel (I) entspricht:
wobei gilt:
R₁ ist eine ethylenische Gruppe;
- R₂, R₃, R₄, R₅ und R₆ stehen unabhängig voneinander für ein Hydrogenatom,
eine -OH-Gruppe, eine Aminogruppe, eine Oximgruppe, eine Hydrazongruppe, 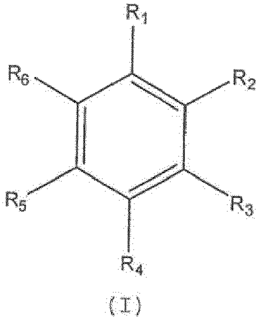
eine Carboxylgruppe -COOH, ein Halogenatom, eine Trialkylsilangruppe, eine - M-L-Gruppe, wobei M das erste Metallelement und L eine Phosphingruppe ist, sowie deren Salze, mit der Maßgabe, dass wenigstens eine der Gruppen R₂ bis R₆ eine -M-L-Gruppe, wie oben definiert, darstellt.

6. Verfahren zur Herstellung eines Materials nach einem der vorhergehenden Ansprüche, wobei das zweite Monomer wenigstens eine Gruppe mit einem freien Elektronenpaar umfasst.

7. Verfahren zur Herstellung eines Materials nach einem der vorhergehenden Ansprüche, wobei das zweite Monomer ein zyklisches Monomer ist, das wenigstens eine Stickstoffgruppe umfasst, die gewählt ist aus:
- aromatischen Monomeren, die eine Oximgruppe umfassen;
- Monomeren, die eine alicyclische Amingruppe, wie eine Cyclamgruppe, umfassen; und
- heteroaromatischen Monomeren, die ein oder mehrere Stickstoffatome umfassen.

8. Verfahren zur Herstellung eines Materials nach einem der vorhergehenden Ansprüche, wobei das zweite Monomer ein Monomer der folgenden Formel (III) ist:
wobei gilt:
- R₇ ist eine ethylenische Gruppe; 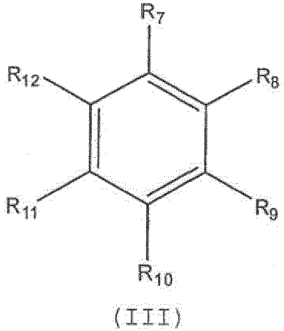
- R₈, R₉, R₁₀, R₁₁ und R₁₂ stehen unabhängig voneinander für ein Wasserstoffatom, eine -OH-Gruppe, eine Amingruppe, eine -CHO-Gruppe, eine Oximgruppe, eine Hydrazongruppe, eine Carboxylgruppe -COOH, ein Halogenatom, eine Trialkylsilangruppe sowie deren mögliche Salze, mit der Maßgabe, dass wenigstens eine der Gruppen R₈ bis R₁₂ für eine -OH-Gruppe steht und dass wenigstens eine der Gruppen R₈ bis R₁₂ für eine Oximgruppe steht.

9. Verfahren zur Herstellung eines Materials nach Anspruch 7, wobei das zweite Monomer ein Monomer der folgenden Formel (V) ist:
wobei gilt:
- R₁₃, R₁₄ und R₁₅ stehen für eine Styrolgruppe; und 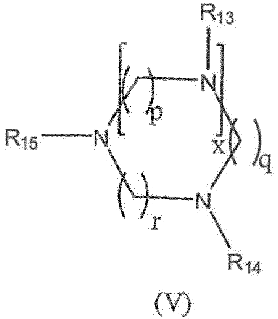
- p, q, r, x sind ganze Zahlen von 0 bis 20, mit der Maßgabe, dass, wenn x gleich 0 ist, (r+q) wenigstens gleich 2 ist, und wenn x gleich 1 ist, wenigstens ein Wert aus p, q, r von 0 verschieden ist.

10. Verfahren zur Herstellung eines Materials nach Anspruch 7, wobei das zweite Monomer ein Vinylimidazolmonomer ist, das der folgenden Formel (VII) entspricht:

11. Verfahren zur Herstellung eines Materials nach einem der vorhergehenden Ansprü- 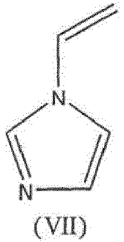 che, wobei der Copolymerisationsschritt in Gegenwart von einem oder mehreren Comonomeren, gewählt aus Styrolmonomeren und Acrylatmonomeren, durchgeführt wird.

12. Verfahren nach Anspruch 11, wobei das oder die Comonomere wenigstens zwei ethylenische Gruppen umfassen.

13. Verfahren nach den vorhergehenden Ansprüchen, wobei eines der Verfahren zusätzlich einen Schritt des Trocknens des Materials aus Schritt a) oder Schritt b) umfasst.

14. Verfahren nach einem der vorhergehenden Ansprüche, wobei das erste metallische Element Gold ist und das zweite metallische Element Kupfer ist.

15. Verfahren nach einem der vorhergehenden Ansprüche, wobei das aus dem Verfahren resultierende Material ein Schaum ist.

## Claims

1. A method for preparing a polymeric material doped with at least one first metal element and at least one second metal element, said at least one first metal element and said at least one second metal element being identical or different from each other, said method comprising:
a) a step for copolymerization of at least one first monomer comprising at least one first metal element and of at least one second monomer comprising at least one chelating group of at least one second metal element, in return for which a polymeric material is obtained, comprising recurrent units stemming from the polymerization of said first monomer, said recurrent units comprising said at least one first metal element and comprising recurrent units stemming from the polymerization of said second monomer, said recurrent units comprising chelating groups of at least one second metal element; and
when said first metal element is different from said second metal element, said method further comprising a step b) for putting the material obtained in step a) in contact with a solution comprising said at least second metal element, in return for which said at least second metal element is complexed with the aforementioned chelating groups,
this step b) being optional when said first metal element and said second metal element are identical.

2. The method for preparing a material according to claim 1, wherein, when said at least one first metal element and said at least one second metal element are identical, the method does not comprise the application of step b).

3. The method for preparing a material according to claim 1, wherein, when said at least one first metal element and said at least one second metal element are different, the method comprises the application of step a) and the application of step b).

4. The method for preparing a material according to any of the preceding claims, wherein the first monomer is an ethylenic monomer comprising at least one aromatic group to which is bound a group bearing at least one first metal element.

5. The method for preparing a material according to any of the preceding claims, wherein the first monomer fits the following formula (I): 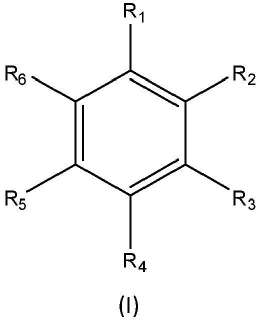 wherein:
- R₁ is an ethylenic group;
- R₂, R₃, R₄, R₅ and R₆ represent, independently of each other, a hydrogen atom, an -OH group, an amine group, a -CHO group, an oxime group, a hydrazone group, a carboxyl group -COOH, a halogen atom, a trialkylsilane group, a -M-L group with M being the first metal element and L being a phosphine group, and the optional salts thereof, provided that least one of the groups R₂ to R₆ represent a -M-L group as defined above.

6. The method for preparing a material according to any of the preceding claims, wherein the second monomer comprises at least one group bearing a free doublet.

7. The method for preparing a material according to any of the preceding claims, wherein the second monomer is a cyclic monomer comprising at least one nitrogen-containing group selected from among:
- aromatic monomers comprising an oxime group;
- monomers comprising an alicyclic amine group, such as a cyclam group; and
- heteroaromatic monomers comprising one or several nitrogen atoms.

8. The method for preparing a material according to any of the preceding claims, wherein the second monomer is a monomer of the following formula (III): 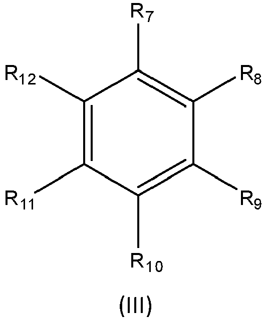 wherein:
- R₇ is an ethylenic group;
- R₈, R₉, R₁₀, R₁₁ and R₁₂ represent, independently of each other, a hydrogen atom, an -OH group, an amine group, a -CHO group, an oxime group, a hydrazone group, a carboxyl group -COOH, a halogen atom, a trialkylsilane group, and the optional salts thereof, provided that at least one of the groups R₈ to R₁₂ represents an -OH group and at least one of the groups R₈ to R₁₂ represents an oxime group.

9. The method for preparing a material according to claim 7, wherein the second monomer is a monomer of the following formula (V): 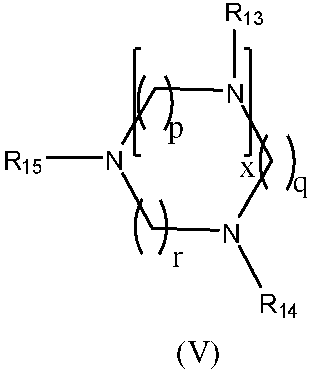 wherein:
- R₁₃, R₁₄ and R₁₅ represent a styrenic group; and
- p, q, r, x are integers ranging from 0 to 20, provided that, when x is equal to 0, (r+q) is at least equal to 2, and when x is equal to 1, at least one of p, q, r is different from 0.

10. The method for preparing a material according to claim 7, wherein the second monomer is a vinylimidazole monomer fitting the following formula (VII):

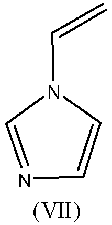

11. The method for preparing a material according to any of the preceding claims, wherein the copolymerization step is carried out in the presence of one or several comonomers selected from among styrenic monomers and acrylate monomers.

12. The method according to claim 11, wherein the comonomer(s) comprise(s) at least two ethylenic groups.

13. The method according to any of the preceding claims, further comprising a step for drying the material from step a) or from step b).

14. The method according to any of the preceding claims, wherein the first metal element is gold and the second metal element is copper.

15. The method according to any of the preceding claims, wherein the material obtained at the end of the method is a foam.
